# EUROPÄISCHE PATENTSCHRIFT

(11) **EP 2 113 397 B1**
(45) Veröffentlichungstag und Bekanntmachung des Hinweises auf die Patenterteilung: **20.10.2010**
(21) Anmeldenummer: 09153264.8
(22) Anmeldetag: 20.02.2009
(51) Int. Cl.: B60C 9/00

(54) **Festigkeitsträgerlage aus Hybridcorden für elastomere Erzeugnisse, insbesondere für die Gürtelbandage von Fahrzeugluftreifen**
Stability beam layout made from hybrid cords for elastomeric products, in particular for the belt of vehicle pneumatic tyres
Couche de renfort en corde hybride pour produits élastomères, en particulier pour le bandage de ceintures de pneus de véhicule

(30) Priorität: 30.04.2008 DE 102008021820
(43) Veröffentlichungstag der Anmeldung: 04.11.2009
(73) Patentinhaber: Continental Reifen Deutschland GmbH, 30165 Hannover (DE)
(72) Erfinder: Carole, Justine, 31515 Wunstorf (DE); Van Barneveld, Claus, Dr., 30827 Garbsen (DE)
(74) Vertreter: Finger, Karsten

(56) Entgegenhaltungen:
- EP-A- 0 661 179
- EP-A- 1 475 248
- EP-A- 1 745 945
- EP-A- 1 878 591
- WO-A-2008/145421
- FR-A- 1 494 764
- US-A1- 2003 159 768

## Beschreibung

Die Erfindung betrifft eine Festigkeitsträgerlage für elastomere Erzeugnisse, insbesondere für die Gürtelbandage von Fahrzeugluftreifen, wobei die Festigkeitsträger der Festigkeitsträgerlage Hybridcorde sind, welche innerhalb der Lage im Wesentlichen parallel zueinander angeordnet sind und aus einem ersten verdrehten Garn aus einem ersten Material und aus einem zweiten verdrehten Garn aus einem zweiten Material, die miteinander endverdreht sind, aufgebaut sind, wobei das erste verdrehte Garn ein Rayongarn ist. Ferner betrifft die Erfindung einen Fahrzeugluftreifen, enthaltend eine Gürtelbandage und/oder einen Wulstverstärker aus einer solchen Festigkeitsträgerlage.

Um bei Fahrzeugluftreifen, insbesondere im Hochgeschwindigkeitseinsatz, eine Erhebung des Reifens durch die im Fahrbetrieb auftretenden Fliehkräfte zu verhindern, ist es bekannt, bei einem Fahrzeugluftreifen eine Gürtelbandage vorzusehen. Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt zumindest die Gürtelränder ab. Die Gürtelbandage enthält üblicherweise parallel und im Wesentlichen in Umfangsrichtung verlaufende Festigkeitsträger in Form von Corden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Vorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird.

Die Corde der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Um diesen Anforderungen zu genügen, sollten sich die Corde bis zu einer Dehnung von ca. 3 % mit mäßigem Kraftaufwand und ab einer höheren Dehnung nur noch mit sehr hohem Kraftaufwand dehnen lassen.

Eine Hybridcorde aufweisende Festigkeitsträgerlage, insbesondere als Gürtelbandage für Fahrzeugreifen, ist aus der EP 1 475 248 A1 bekannt geworden. Die Hybridcorde bestehen aus zwei verdrehten Garnen, wobei ein Garn des Cordes ein Aramidgarn und das zweite Garn ein Nylongarn ist. Die vorgenannte Festigkeitsträgerlage verleiht dem Reifen eine gute Hochgeschwindigkeitstauglichkeit. Jedoch kann der Reifen bei Verwendung des Nylongarnes durch erhöhten Schrumpf zum Flatspotting neigen.

Aus der US 2003/0159768A1 ist ein Hybridcord aus einem Rayon-Garn und einem PES-Garn bekannt geworden, welche miteinander endverdreht sind. Die Garne des Hybridcordes weisen entweder die gleiche Feinheit und aber eine unterschiedliche Verdrehungszahl oder eine unterschiedliche Feinheit und aber eine gleiche Verdrehungszahl auf. Ein derartiger Hybridcord neigt zwar weniger zum Flatspotting, jedoch sind die Freiheitsgrade zur Einstellung des Cordes auf die erwünschten Anforderungen des Produktes, in dem der Hybridcord eingesetzt werden soll, eingeschränkt.

Es ist daher die Aufgabe der vorliegenden Erfindung, eine optimierte Festigkeitsträgerlage aus gummierten Hybridcorden für elastomere Erzeugnisse, insbesondere für die Gürtelbandage von Fahrzeugluftreifen bereitzustellen, welche einem nur geringfügigen Schrumpf unterliegt und damit nur geringfügig zum Flatspotting neigt. Zudem soll sich die Festigkeitsträgerlage durch ein Kraft-Dehnungs-Verhalten auszeichnen, das bei Verwendung der Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit verleiht. Zudem soll der Hybridcord an die Anforderungen des Produktes, in dem der Hybridcord eingesetzt werden soll, einfach anpassbar sein.

Die Aufgabe wird gelöst, indem das zweite verdrehte Garn ein aus organischen Synthesefasern bestehendes Garn ist, indem die Verdrehungszahl des ersten Garnes von der Verdrehungszahl des zweiten Garnes verschieden ist und indem die Feinheit des ersten Garnes von der Feinheit des zweiten Garnes verschieden ist.

Erfindungswesentlich ist, dass die Festigkeitsträgerlage, welche Festigkeitsträger aus einem Rayon-Garn und aus einem aus organischen Synthesefasern bestehenden Garn, vorzugsweise aus Polyamid oder aus PES, durch unterschiedliche Verdrehungszahlen beider Garne und durch unterschiedliche Feinheiten beider Garne, einen hohen Freiheitsgrad in der Einstellung des Cordes auf die Anforderungen eines konkreten Produktes ermöglicht. Durch den Einsatz eines vorgenannten Cordes ist eine Festigkeitsträgerlage geschaffen, deren Festigkeitsträger an die Erfordernisse in Bezug auf geforderte Kraft-Dehnungs-Eigenschaften optimal anpassbar ist.

Das Rayon-Garn weist in Abhängigkeit von der Verdrehungszahl einen höheren E-Modul als PET-, Beltec®-, Nylon- und Polyamid-Garn auf. Die Ermüdungsresistenz ist gut und der Schrumpf ist sehr gering.

In einer bevorzugten Ausführungsform ist das zweite Garn ein PES-Garn. Als PES-Garne kommen bevorzugt PET-Garne, PEN-Garne oder Beltec®-Garne in Betracht. Die verschiedenen PES-Garne weisen unterschiedliche mechanische Eigenschaften auf, jedoch ist das PET-Garn am optimiertesten und wird daher bevorzugt im Hybridcord eingesetzt.

Während der Reifenherstellung übernimmt in dem Hybridkord zuerst komplett das PES-Garn tragende Eigenschaften, um die ausreichende Erhebung während der Bombage und der Vulkanisation zu ermöglichen. Im einsatzbereiten Reifen übernehmen beide Garne des Hybridcordes tragende Eigenschaften, wodurch dem Reifen eine große Hochgeschwindigkeitstauglichkeit verliehen ist. Der Hybridcord weist einen geringeren Schrumpf auf, weil Rayon und PES dimensionsstabil sind. Ein Fahrzeugluftreifen mit einer erfindungsgemäßen Festigkeitsträgerlage als Gürtelbandage neigt nur noch geringfügig zum Flatspotting. Zudem weist ein Fahrzeugluftreifen mit einer erfindungsgemäßen Gürtelbandage eine hohe Umfangssteifigkeit auf, welche die guten Hochgeschwindigkeitseigenschaften bewirken. Es ist eine präzise Ausformung während der Reifenherstellung ermöglicht, wodurch der Reifen eine gute Uniformity aufweist.

In einer anderen Ausführungsform der erfindungsgemäßen Festigkeitsträgerlage ist das zweite Garn des Festigkeitsträgers ein Polyamid-Garn.

In bevorzugten Ausführungsformen weist das zweite Garn eine Feinheit von 250 - 3000 dtex, vorzugsweise von 1440 dtex, auf. Somit hat das Garn noch immer einen kleinen Durchmesser, aber einen für seine Anwendung vernünftigen E-Modul.

Das Rayon-Garn weist in bevorzugten Ausführungsformen eine Feinheit von 250 - 3000 dtex, vorzugsweise von 1840 dtex, auf. Es werden bei optimiertem Garn-Durchmesser ausreichende Materialeigenschaften erzielt. Die Garnfeinheiten der beiden Garne des Hybridcordes sind jedoch unterschiedlich.

Das zweite Garn, welches aus Polyamid oder PES besteht, weist einen geringeren E-Modul als das erste Garn, welches ein Rayon-Garn ist, auf, um die Erhebung während des Reifenherstellungsprozesses zu ermöglichen.

Zweckmäßigerweise sind beide Garne zu einem Hybridcord mit einer Verdrehungszahl endverdreht, die kleiner als die Verdrehungszahl des Rayon-Garnes und größer oder gleich der Verdrehungszahl des zweiten Garnes ist. Mit einer zu hohen Drehungszahl verschlechtern sich die Materialeigenschaften. Bei einer zu geringen Drehungszahl verliert der Cord seine Ermüdungsbeständigkeit und eine ausreichende Erhebung des Reifenrohlings wäre aufgrund des resultierenden hohen Moduls nicht gewährleistbar.

Zusätzlich kann die Dehnung des Cordes durch geeignete, dem Fachmann bekannte Dip-Verfahren gesteuert werden.

Um eine zuverlässige Haftung von textilen Festigkeitsträgern zum Gummi zu gewährleisten, ist es zweckmäßig, die Hybridcorde mit einer Haftimprägnierung, z.B. mit einem RFL-Dip im 1- oder 2-Bad-Verfahren, zu versehen.

Verwendet man eine der vorbeschriebenen Festigkeitsträgerlagen in einem Fahrzeugluftreifen, vorzugsweise als Gürtelbandage, so weist der Reifen eine besonders gute Hochgeschwindigkeitstauglichkeit auf und Flatspotting-Effekte werden verringert.

Beim Einsatz der vorbeschriebenen Festigkeitsträgerlage als Wulstverstärker in einem Fahrzeugluftreifen liegt der Vorteil darin, dass der Hybridfestigkeitsträger einen nur geringen Schrumpf aufweist und damit die Neigung zum Flatspotting reduziert ist. Des Weiteren werden insbesondere in Bezug auf Materialkosten Vorteile erzielt, während aber eine ausreichende Festigkeit erhalten ist.

Weitere Vorteile der Erfindung werden im Zusammenhang mit den nachfolgenden Beispielen von Hybridcord-Konstruktion, die in erfindungsgemäßen Festigkeitsträgerlagen, vorzugsweise als Gürtelbandage in Fahrzeugluftreifen einsetzbar sind, näher erläutert:

### Hybridcord 1:

Der Hybridcord besteht aus einem Rayon-Garn mit einer Feinheit von 1840 dtex, Z-gedreht mit 320 T/m Erstverdrehung und einem Garn aus PET mit einer Feinheit von 1440 dtex, Z- gedreht mit 150 T/m Erstverdrehung, welche mit einer Endverdrehung von 250 T/m zu einem Hybridcord (Rayon 1840x1 + PET 1440x1) mit 250 T/m S-endverdreht sind. Somit weist das zweite Garn, das PET-Garn eine kleinere Verdrehungszahl als das erste Garn, das Rayon-Garn auf. Beide Garne sind zu einem Hybridcord mit einer Verdrehungszahl von 250 T/m endverdreht, die kleiner als die Verdrehungszahl des Rayon-Garnes von 320 T/m und größer oder gleich der Verdrehungszahl des PET-Garnes von 150 T/m ist.

### Hybridcord 2:

Der Hybridcord besteht aus einem Rayon-Garn mit einer Feinheit von 1220 dtex, Z-gedreht mit 320 T/m Erstverdrehung und einem Garn aus PET mit einer Feinheit von 1100 dtex, Z- gedreht mit 250 T/m Erstverdrehung, welche mit einer Endverdrehung von 300 T/m zu einem Hybridcord (Rayon 1220x1 + PET 1100x1) mit 300 T/m S-endverdreht sind. Somit weist das zweite Garn, das PET-Garn eine kleinere Verdrehungszahl als das erste Garn, das Rayon-Garn auf. Beide Garne sind zu einem Hybridcord mit einer Verdrehungszahl von 300 T/m endverdreht, die kleiner als die Verdrehungszahl des Rayon-Garnes von 320 T/m und größer oder gleich der Verdrehungszahl des PET-Garnes von 250 T/m ist.

### Hybridcord 3:

Der Hybridcord besteht aus einem Rayon-Garn mit einer Feinheit von 1220 dtex, S-gedreht mit 320 T/m Erstverdrehung und ein PEN-Garn mit einer Feinheit von 1100 dtex, S- gedreht mit 200 T/m Erstverdrehung, welche mit einer Endverdrehung von 320 T/m zu einem Hybridcord (Rayon 1220x 1 + PET 1100x1) mit 320 T/m Z-endverdreht sind.

### Hybridcord 4:

Der Hybridcord besteht aus einem Rayon-Garn mit einer Feinheit von 1840 dtex, Z-gedreht mit 320 T/m Erstverdrehung und einem Garn aus Nylon mit einer Feinheit von 1400 dtex, Z- gedreht mit 100 T/m Erstverdrehung, welche mit einer Endverdrehung von 300 T/m zu einem Hybridcord (Rayon 1840x 1 + Nylon 1400x1) mit 300 T/m S-endverdreht sind.

Somit weist das zweite Garn, das Nylon-Garn eine kleinere Verdrehungszahl als das erste Garn, das Rayon-Garn auf. Beide Garne sind zu einem Hybridcord mit einer Verdrehungszahl von 300 T/m endverdreht, die kleiner als die Verdrehungszahl des Rayon-Garnes von 320 T/m und größer oder gleich der Verdrehungszahl des NylonGarnes von 100 T/m ist.

Somit sind vergleichsweise feine Hybridcorde geschaffen, die aufgrund ihres geringen Gewichtes, aber auch aufgrund ihrer vorteilhaften Eigenschaften wie die Tragfähigkeit des Hybridcordes und die geringe Neigung zum Flatspotting durch nur geringe Schrumpfeigenschaften des Cordes, die Performance des Reifens, insbesondere eines UHP-(Ultra-High-Performace-) Reifens, erhöht.

Es können die Garne S- und der Cord Z-gedreht sein. Es können aber auch die Garne Z- und der Cord S-gedreht sein.

Das Rayon-Garn weist aufgrund seiner chemischen Struktur eine vorteilhafte, robuste Gummihaftung auf.

## Patentansprüche

1. Festigkeitsträgerlage für elastomere Erzeugnisse, insbesondere für die Gürtelbandage von Fahrzeugluftreifen, wobei die Festigkeitsträger der Festigkeitsträgerlage Hybridcorde sind, welche innerhalb der Lage im Wesentlichen parallel zueinander angeordnet sind und aus einem ersten verdrehten Garn aus einem ersten Material und aus einem zweiten verdrehten Garn aus einem zweiten Material, die miteinander endverdreht sind, aufgebaut sind, wobei das erste verdrehte Garn ein Rayongarn ist,
**dadurch gekennzeichnet, dass** das zweite verdrehte Garn ein aus organischen Synthesefasern bestehendes Garn ist,
dass die Verdrehungszahl des ersten Garnes von der Verdrehungszahl des zweiten Garnes verschieden ist und
dass die Feinheit des ersten Garnes von der Feinheit des zweiten Garnes verschieden ist.

2. Festigkeitsträgerlage nach Anspruch 1,
**dadurch gekennzeichnet, dass** das zweite Garn ein PES-Garn ist.

3. Festigkeitsträgerlage nach Anspruch 1,
**dadurch gekennzeichnet, dass** das zweite Garn ein Polyamid-Garn ist.

4. Festigkeitsträgerlage nach zumindest einem der vorangehenden Ansprüche,
**dadurch gekennzeichnet, dass** das Rayon-Garn eine Feinheit von 250 - 3000 dtex, vorzugsweise von 1840 dtex aufweist.

5. Festigkeitsträgerlage nach Anspruch 2 oder 3,
**dadurch gekennzeichnet, dass** das PES-Garn oder das Polyamid-Garn eine Feinheit von 250 - 3000 dtex aufweist.

6. Festigkeitsträgerlage nach einem der vorangehenden Ansprüche,
**dadurch gekennzeichnet, dass** das zweite Garn eine kleinere Verdrehungszahl als das erste Garn aufweist.

7. Festigkeitsträgerlage nach zumindest einem der vorangehenden Ansprüche,
**dadurch gekennzeichnet, dass** beide Garne zu einem Hybridcord mit einer Verdrehungszahl endverdreht sind, die kleiner als die Verdrehungszahl des Rayon-Garnes und größer oder gleich der Verdrehungszahl des zweiten Garnes ist.

8. Festigkeitsträgerlage nach zumindest einem der vorangehenden Ansprüche,
**dadurch gekennzeichnet, dass** die Hybridcorde mit einer Haftimprägnierung zur Gewährleistung der Haftung der Festigkeitsträger zum Gummi versehen sind.

9. Festigkeitsträgerlage nach zumindest einem der vorangehenden Ansprüche,
**dadurch gekennzeichnet, dass** der Festigkeitsträger der Festigkeitsträgerlage eine Konstruktion Rayon (1840x1) + PET (1440x1) tpm: 320-150/250 aufweist.

10. Festigkeitsträgerlage nach zumindest einem der vorangehenden Ansprüche 1-10, **dadurch gekennzeichnet, dass** der Festigkeitsträger der Festigkeitsträgerlage eine Konstruktion Rayon (1220x1) + PEN (1100x1) tpm: 320-200/320 aufweist.

11. Fahrzeugluftreifen, enthaltend zumindest eine Festigkeitsträgerlage gemäß zumindest einem der Ansprüche 1 bis 8 oder 1 bis 7, 9.

12. Fahrzeugluftreifen nach Anspruch 10,
**dadurch gekennzeichnet, dass** die Festigkeitsträgerlage als Gürtelbandage und/oder als Wulstverstärker angeordnet ist.

## Claims

1. Strength element ply for elastomeric articles of manufacture, more particularly for the belt bandage of pneumatic vehicle tyres, the strength element ply strength elements being hybrid cords which form an essentially parallel arrangement within the ply and are constructed of a first twisted yarn of a first material and a second twisted yarn of a second material which are end-twisted together, the first twisted yarn being a rayon yarn,
**characterized in that** the second twisted yarn is a yarn consisting of organic synthetic fibres,
the twist level of the first yarn differs from the twist level of the second yarn, and
the linear density of the first yarn differs from the linear density of the second yarn.

2. Strength element ply according to Claim 1, **characterized in that** the second yarn is a PES yarn.

3. Strength element ply according to Claim 1, **characterized in that** the second yarn is a polyamide yarn.

4. Strength element ply according to at least one of the preceding claims, **characterized in that** the rayon yarn has a linear density of 250 - 3000 dtex and preferably of 1840 dtex.

5. Strength element ply according to Claim 2 or 3, **characterized in that** the PES yarn or the polyamide yarn has a linear density of 250 - 3000 dtex.

6. Strength element ply according to any one of the preceding claims, **characterized in that** the second yarn has a lower twist level than the first yarn.

7. Strength element ply according to at least one of the preceding claims, **characterized in that** the two yarns are end-twisted to form a hybrid cord with a twist level less than the twist level of the rayon yarn and not less than the twist level of the second yarn.

8. Strength element ply according to at least one of the preceding claims, **characterized in that** the hybrid cords have an adhesive impregnation to ensure adherence of the strength elements to the rubber.

9. Strength element ply according to at least one of the preceding claims, **characterized in that** the strength element of the strength element ply has a construction of rayon (1840×1) + PET (1440x1) tpm: 320-150/250.

10. Strength element ply according to at least one of the preceding Claims 1-10, **characterized in that** the strength element of the strength element ply has a construction of rayon (1220×1) + PEN (1100×1) tpm: 320-200/320.

11. Pneumatic vehicle tyre comprising at least one strength element ply according to at least one of Claims 1 to 8 or 1 to 7, 9.

12. Pneumatic vehicle tyre according to Claim 10, **characterized in that** the strength element ply is disposed as belt bandage and/or as bead reinforcer.

## Revendications

1. Couche de renforts pour produits en élastomère, en particulier pour la bande de ceinture de bandages pneumatiques pour roues de véhicule, les renforts de la couche de renforts étant des câbles hybrides qui sont disposés essentiellement en parallèle les uns aux autres à l'intérieur de la couche et qui sont constitués d'un premier fil torsadé en un premier matériau et d'un deuxième fil torsadé en un deuxième matériau qui sont torsadés l'un avec l'autre, le premier fil torsadé étant un fil de rayonne, **caractérisée en ce que**
le deuxième fil torsadé est un fil constitué de fibres organiques synthétiques,
**en ce que** le nombre de torsions du premier fil est différent du nombre de torsions du deuxième fil et
**en ce que** la finesse du premier fil est différente de la finesse du deuxième fil.

2. Couche de renforts selon la revendication 1, **caractérisée en ce que** le deuxième fil est un fil de PES.

3. Couche de renforts selon la revendication 1, **caractérisée en ce que** le deuxième fil est un fil de polyamide.

4. Couche de renforts selon au moins l'une des revendications précédentes, **caractérisée en ce que** le fil de rayonne présente une finesse de 250 à 3 000 dtex et de préférence de 1 840 dtex.

5. Couche de renforts selon les revendications 2 ou 3, **caractérisée en ce que** le fil de PES ou le fil de polyamide ont une finesse de 250 à 3 000 dtex.

6. Couche de renforts selon l'une des revendications précédentes, **caractérisée en ce que** le deuxième fil présente un nombre de torsions plus petit que celui du premier fil.

7. Couche de renforts selon au moins l'une des revendications précédentes, **caractérisée en ce que** les deux fils sont torsadés ensemble pour former un câble hybride dont le nombre de torsions est plus petit que le nombre de torsions du fil de rayonne et est supérieur ou égal au nombre de torsions du deuxième fil.

8. Couche de renforts selon au moins l'une des revendications précédentes, **caractérisée en ce que** les câbles hydrides sont imprégnés d'adhésif pour garantir l'adhérence des renforts sur le caoutchouc.

9. Couche de renforts selon au moins l'une des revendications précédentes, **caractérisée en ce que** les renforts des couches de renforts présentent une structure rayonne (1 840 x 1) + PET (1 440 x 1) tpm : 320-150/250.

10. Couche de renforts selon au moins l'une des revendications 1 à 10 qui précèdent, **caractérisée en ce que** les renforts de la couche de renforts présentent une structure (1 220 x 1) + PEN (1 100 x 1) tpm : 320-200/320.

11. Bandage pneumatique pour roue de véhicule contenant au moins une couche de renforts selon au moins l'une des revendications 1 à 8 ou 1 à 7, 9.

12. Bandage pneumatique pour roue de véhicule selon la revendication 10, **caractérisée en ce que** la couche de renforts est disposée comme bande de ceinture et/ou comme renfort de bourrelet.
